# EUROPÄISCHE PATENTSCHRIFT

(11) **EP 0 582 951 B1**
(45) Veröffentlichungstag und Bekanntmachung des Hinweises auf die Patenterteilung: **23.10.1996**
(21) Anmeldenummer: 93112466.3
(22) Anmeldetag: 04.08.1993
(51) Int. Cl.: C08L 55/02, C08L 25/12

(54) **Thermoplastische Formmasse mit Matteffekt**
Thermoplastic moulding composition with mat effect
Masse de moulage thermoplastique présentant un aspect mat

(30) Priorität: 13.08.1992 DE 4226750
(43) Veröffentlichungstag der Anmeldung: 16.02.1994
(73) Patentinhaber: BASF Aktiengesellschaft, 67063 Ludwigshafen (DE)
(72) Erfinder: Deckers, Andreas, Dr., D-6700 Ludwigshafen (DE); Guentherberg, Norbert, Dr., D-6720 Speyer (DE); Bueschl, Rainer, Dr., D-67459 Böhl-Iggelheim (DE); Jahns, Ekkehard, Dr., D-6945 Hirschberg (DE)

(56) Entgegenhaltungen:
- EP-A- 0 328 960
- FR-A- 1 323 109
- US-A- 4 703 084

## Beschreibung

Für eine Reihe von Anwendungen, beispielsweise im Bereich der Automobil-Innenausstattung, ist es zur Erzielung einer blendfreien Oberfläche wünschenswert, schlagzäh modifizierte Thermoplaste mit matter Oberfläche einzusetzen.

Matte ABS-Formmassen erhält man beispielsweise durch Zusatz von Nitrilkautschuk nach der Lehre der DE-PS 33 22 748 und der US-PS 3 449 470. Eine andere Möglichkeit, den Oberflächenglanz zu dämpfen, ist der Zusatz von epoxid- und säuregruppenhaltigen Polymeren (DE 33 40 591).

EP-A-342 283 beschreibt die Möglichkeit Erzielung eines Matteffektes durch Zusatz von vernetzten Acryl-Polymeren zu thermoplastischen Formmassen. Auf diese Weise hergestellte ABS-Formmassen zeigen zwar einen gewissen Matteffekt, jedoch ist gleichzeitig ein starker Abfall der multiaxialen Zähigkeit und anderer mechanischer Eigenschaften zu beobachten.

Für viele Anwendungen reicht der mit den bekannten Mitteln erzielbare Matteffekt jedoch nicht aus, wenn gleichzeitig eine hohe mechanische Belastbarkeit verlangt wird.

Aufgabe war daher, eine Formmasse auf Basis eines schlagzäh modifizierten SAN-Copolymeren mit verbessertem, samtartigem Matteffekt ohne nennswerte Einbußen bei der mechanischen Festigkeit anzugeben. Es wurde gefunden, daß diese Aufgabe durch eine Kombination eines eventuell schlagzäh modifizierten SAN-Polymeren mit einem Nitril-(NBR-)Kautschuk und außerdem einem vernetzten PMMA-Copolymeren gelöst wird. Man erhält ein Produkt, welches sowohl eine samtmatte Oberfläche als auch eine ausreichende mechanische Festigkeit aufweist.

Unmittelbarer Erfindungsgegenstand ist eine thermoplastische Formmasse die enthält, bezogen auf die Summe ihrer Bestandteile A, B und C,
A:70 bis 99 Gew.-% eines thermoplastischen Harzes A aus, bezogen auf A,
A1:50 bis 100 Gew.-% einer Hartmatrix A1 aus, bezogen auf A1,
   A11:50 bis 95 Gew.-% Einheiten einer vinylaromatingschen Verbindung oder Methylmethacrylat oder deren Mischungen (A11) und
   A12:5 bis 50 Gew.-% Einheiten des Acrylnitrils A12;
A2:bis zu 50 Gew.-% eines kautschukelastischen teilchenförmigen Pfropfcopolymerisates A2 aus, bezogen auf A2,
   A21:30 bis 80 Gew.-% mindestens einer elastomeren Pfropfgrundlage A21 mit einer mittleren Teilchengröße von 30 bis 1000 nm aus, bezogen auf A21,
   A211:50 bis 100 Gew.-% Einheiten eines 1,3-Diens oder kautschukelastische Polymere bildenden C₄-C₈-Alkylacrylats (A211),
   A212:bis zu 50 Gew.-% Einheiten mindestens eines Vinylmonomeren A212;
und
A22:15 bis 85 Gew.-% einer Pfropfhülle A22 aus, bezogen auf A22,
A221:50 bis 90 Gew.-% Einheiten eines vinyl-aromatischen Monomeren A221 und
A222:10 bis 50 Gew.-% Einheiten des Acrylnitrils A222;
B:0,5 bis 15 Gew.-% eines Nitrilkautschuks B aus, bezogen auf B,
B1:10 bis 40 Gew.-% Einheiten des Acrylnitrils und
B2:60 bis 90 Gew.-% Einheiten des Butadiens;
und
C:0,5 bis 15 Gew.-% eines in der Hartmatrix A verteilten teilchenförmigen Polymerisats C aus, bezogen auf C,
C1:80 bis 99 Gew.-% Einheiten des Methylmethacrylats
C2:0,5 bis 15 Gew.-% Einheiten eines Esters der Acrylsäure,
C3: 0,5 bis 5 Gew.-% Einheiten eines mit C1 und C2 copolymerisierbaren vernetzenden Monomeren und
C4: bis zu 10 Gew.-% eines polaren Monomeren ausgewählt aus (Meth)acrylsäure, Hydroxyethyl(meth)acrylat und Dimethylaminoethyl(meth)acrylat,
wobei die mittlere Teilchengröße von C 50 bis 50 000 nm beträgt.

Die erfindungsgemäße Formmasse kann außerdem übliche Zusätze wie Farbstoffe, Pigmente, Antioxidantien, Füllstoffe, Glasfasern und Flammschutzmittel in Mengen bis zu 20 Gew.-% enthalten.

Die erfindungsgemäßen Formmassen zeichnen sich durch eine samtartige Oberfläche aus, wobei die mechanischen Eigenschaften einer entsprechenden SAN-Formmasse erhalten bleiben.

Zur Herstellung einer erfindungsgemäßen Formmasse und ihren Bestandteilen ist im einzelnen das folgende zu sagen:

Die Hartmatrix A1 kann für sich hergestellt werden und entsteht auch beim Pfropfvorgang (wenn es sich um schlagzäh modifiziertes SAN handeln soll), wenn das vorgelegte Elastomer A21 mit den die Hartmatrix aufbauenden Monomeren A11 und A12 (bzw. A221 und A222) gepfropft wird. A11 und A12 kann von A221 und A222 mindestens teilweise und jedenfalls nach den mengenmäßigen Anteilen verschieden sein.

Bevorzugt ist die vinylaromatische Verbindung Styrol oder α-Methylstyrol. Das Mengenverhältnis von A11 zu A12 bzw. A221 und A222 liegt bevorzugt bei 60 bis 85 zu 15 bis 40.

Man erhält SAN-Polymere beispielsweise nach den Angaben im Kunststoffhandbuch Hrsg. Vieweg, Daumiller, Band V, Polystyrol, München 1969, S. 124ff. Geeignete Produkte, die auch im Handel sind, haben z.B. eine Viskositätszahl VZ, ermittelt nach DIN 53 726 bei 25°C, 0,5 %ig in DMF, von 50 bis 100 [ml/g].

Bevorzugt wird jedoch schlagzähes SAN (bei Verwendung von Polybutadien als Schlagzäh-Modifizierungsmittel als ABS bezeichnet) verwendet, das vielfach durch Emulsionspolymerisation hergestellt wird. Dabei wird z.B. 15 bis 85 Gew.-% eines als Latex vorliegenden Elastomeren auf der Grundlage von Butadien mit bis zu 30 Gew.-% Styrol oder eines ebenfalls als Latex vorliegenden (Co)-Polymeren eines Esters der Acrylsäure als Pfropfgrundlage mit 15 bis 85 Gew.-% Styrol und Acrylnitril umgesetzt. Styrol und Acrylnitril werden gewöhnlich im Verhältnis 20 : 1 bis etwa 4 : 6 verwendet.

Es versteht sich, daß Styrol durch seine üblichen Austauschstoffe (z.B. Alkylstyrole oder Methylmethacrylat) ganz oder teilweise ersetzt sein kann.

Der Pfropfkautschuk A2 besteht somit aus einem Elastomeren (Kautschuk) A21, das 30 bis 80 Gew.-%, vorzugsweise 50 bis 80 Gew.-% und insbesondere 70 bis 55 Gew.-%, jeweils bezogen auf A2 ausmacht, und einer auf das Elastomere gepfropften Hülle A22. Das Elastomere A21 besteht aus einem Latex aus Polyacrylat oder vorzugsweise aus Polymeren von Butadien (bzw. substituiertem Butadien wie Isopren, Chloropren u.a.) oder enthält, bezogen auf A21, bis zu 30 Gew.-% eines Comonomeren aus der Gruppe von Styrol oder Acrylnitril einpolymerisiert, bei einer mittleren Teilchengröße von 30 bis 1000 nm, bevorzugt 100 bis 750 nm (d₅₀-Wert der integralen Massenverteilung). Die Pfropfhülle A22 weist mindestens ein vinylaromatisches Monomer mit 8 bis 12 Kohlenstoffatomen A221 und mindestens ein monoethylenisch-ungesättigtes Monomer A222 auf. Die Erzeugung der Pfropfhülle geschieht in üblicher Weise durch Emulsionspolymerisation der Pfropfmonomeren A221, A222 in Gegenwart des Kautschuks A21. Die Pfropfhülle A22 kann auch in 2 Verfahrensstufen erhalten werden, wie es beispielsweise EP 258 714 lehrt.

Das Elastomer A21 wird seinerseits hergestellt, indem Butadien gegebenenfalls zusammen mit weiteren Comonomeren, in wäßriger Emulsion bei einer Temperatur von 20 bis 100°C, vorzugsweise von 50 bis 80°C polymerisiert wird. Es können die üblichen Emulgatoren, wie Alkalisalze von Alkyl- oder Alkylarylsulfonsäuren Alkylsulfate, Fettalkoholsulfonate, Salze höherer Fettsäuren mit 10 bis 30 C-Atomen oder Harzseifen verwendet werden. Ausführliche Beschreibungen zur Herstellung von Kautschuklatices sind z.B. der EP 062 901, EP 258 714, DE 24 27 960 und DE 126 035 zu entnehmen. Die Herstellung der benötigten Polybutadien- bzw. Polyacrylat-Latices ist allgemein bekannt.

Nitrilkautschuk B ist in einem Anteil von 0,5 bis 15 Gew.-% , vorzugsweise 1,5 bis 7 Gew.-%, und insbesondere 2 bis 6 Gew.-%, jeweils bezogen auf die Summe von A, B und C in der Formmasse vorhanden.

Es kommen handelsübliche Nitrilkautschuke in Betracht, die 5 bis 35 Gew.-%, insbesondere 15 bis 30 Gew.-% Acrylnitril (Rest Butadien) aufweisen. Diese AN-Bu-Copolymerisate können in Emulsion oder Masse hergestellt werden. Als Plastizitätsmaß dient die Mooney-Viskosität nach ASTM D 1646-81. Erfindungsgemäß geeignete Nitrilkautschuke können eine Mooney-Viskosität, gemessen bei 100°C, von 15 bis 130, insbesondere von 45 bis 100, aufweisen. Die Herstellung derartiger Kautschuke in Emulsion ist in der US-PS 3 449 470 beschrieben. Eine ausführliche Darstellung ist auch in der DE-PS 33 22 784 enthalten.

Der erfindungsgemäß zu verwendende Mischungsbestandteil C ist ein teilchenförmiges Copolymerisat, das beispielsweise nach den Angaben in der EP 443 609 erhalten werden kann. Man stellt danach ein modifiziertes Polymethylmethacrylat in einem Suspensionsverfahren her, wobei einerseits modifizierende Monomere mit polaren Gruppen wie Hydroxyl, Carboxyl oder Diethylamino eingebaut werden können (C4) und andererseits eine gewisse Menge eines vernetzenden Monomeren (C3) und ein längerkettiger Acrylester (C2) mitverwendet wird.

Polymere C, die die vorstehenden Voraussetzungen erfüllen, sind auch im Handel erhältlich.

Für die nachstehenden Beispiele wurden die folgenden Bestandteile bereitgehalten:

### Pfropfcopolymerisat A-1

Durch Polymerisation von 600 Teilen Butadien bis zu einem Umsatz von 98 % in Gegenwart einer Lösung von 6 Teilen Tert.-Dodedecylmercaptan, 7 Teilen C₁₄-Na-Alkylsulfonat als Emulgator, 2 Teilen Kaliumperoxodisulfat und 2 Teilen Natriumpyrosulfat in 800 Teilen Wasser bei 65°C wird ein Polybutadienlatex hergestellt.

Es wird ein Polybutadien erhalten, dessen mittlere Teilchengröße bei 100 nm liegt. Der Latex wird durch Zusatz von 250 Teilen einer 10 %igen Emulsion eines Copolymeren aus 96 Gew.-% Ethylacrylat und 4 Gew.-% Methacrylsäureamid agglomeriert, wobei sich eine mittlere Teilchengröße von 350 nm einstellt. Nach Zusatz von 400 Teilen Wasser, 4 Teilen Na-C₁₄-Alkylsulfonat, und 2 Teilen Kaliumperoxodisulfat werden 400 Teile einer Mischung aus 70 Gew.-% Styrol und 30 Gew.-% Acrylnitril innerhalb von 4 4 Stunden zugesetzt und der Ansatz unter Rühren auf 75°C gehalten. Der Umsatz, bezogen auf Styrol/Acrylnitril ist praktisch quantitativ. Die erhaltene Pfropfkautschukdispersion wird mittels wäßriger Magnesiumsulfatlösung gefällt und entwässert.

### Propfcopolymerisat A-2

160 Teile eines Gemisches aus 98 Gew.-% Butylacrylat und 2 Gew.-% Dicyclopentadienylacrylat (DCPA) wurden in 1500 Teilen Wasser unter Zusatz von 5 Teilen des Na-Salzes einer C₁₂-C₁₈-Paraffinsulfonsäure, 3 Teilen Kaliumperoxodisulfat, 3 Teilen Natriumhydrogencarbonat und 1,5 Teilen Natriumpyrophosphat unter Rühren auf 60°C erwärmt. 15 min nach dem Anspringen der Polymerisationsreaktion werden innerhalb von 3 Stunden weitere 840 Teile der Monomerenmischung zugegeben. Nach Beendigung der Monomerzugabe wird die Emulsion noch eine Stunde bei 60°C gehalten.

2100 Teile der Emulsion werden mit 1150 Teilen Wasser und 2,7 Teilen Kaliumperoxodisulfat versetzt und unter Rühren auf 65°C erwärmt. Nach Erreichen der Reaktionstemperatur werden im Lauf von 3 Stunden 560 Teile eines Gemisches aus 75 Gew.-% Styrol und 25 Gew.-% Acrylnitril zudosiert. Nach Beendigung der Zugabe wird noch 2 Stunden bei 65°C gehalten. Man fällt mittels Magnesiumsulfatlösung, wäscht mit Wasser und entwässert.

### Nitrilkautschuk B

Es wurde ein Handelsprodukt mit einer Mooney-Viskosität ML₄ (100°C) von 50 und einem AN-Gehalt von 30 Gew.-% verwendet.

### Allgemeine Vorschrift zur Herstellung des teilchenförmigen Copolymeren C

In einem 3-1-Kessel mit Dispenser-Rührer (Durchmesser 5 cm) wird ein zweiphasiges Gemisch aus einer wäßrigen Dispersion und Monomeren vorgelegt und mit 3500 min⁻¹ 30 min lang dispergiert. Anschließend erwärmt man auf 67°C und füllt das nun langsam reagierende Gemisch mittels einer Schlauchpumpe in einen vorgeheizten, mit Ankerrührer (150 min⁻¹) versehenen 3-1-Kessel um. Man hält weitere 2,5 Stunden auf 67°C, dann eine Stunde auf 75°C sowie eine Stunde auf 85°C. Die erhaltene Dispersion kann durch Gefrierkoagulation ausgefällt, entwässert und getrocknet werden.

### Herstellung von C-1

### Wäßrige Phase:

1300 g Wasser, 12 g einer 1,6 %igen Lösung eines Copolymeren aus 65 MAS/35 MMA (neutralisiert mit NaOH auf pH 7), 400 g einer teilverseiften Polyvinylacetat-Lösung, handelsüblich als Mowiol 40-88 (10 %ig).

### Monomerphase:

873 g Methylmethacrylat, 27 g Butandioldimethacrylat, 0,15 g t-Butylperpivalat, 0,58 g Dilaurylperoxid, 0,29 g t-Butylperoxineodekanoat, 4,5 g t-Dodecyl-mercaptan.

Die mit den vorstehenden Rohstoffen hergestellte Dispersion hat einen Feststoffgehalt von 34,4 %. Die Teilchengröße liegt im Bereich von 1000 bis 18000 nm, wobei der überwiegende Anteil im Bereich 2000 bis 6000 nm liegt.

Zur Beurteilung der nachstehenden Beispiele bzw. zum Vergleich wurde die Kerbschlagzähigkeit nach DIN 53 453 an Normkleinstäben bestimmt.

Für die Glanzmessungen wurden in einer Hochglanz-Form auf einer Spritzgußmaschine Rundscheiben bei einer Massetemperatur von 250°C gespritzt. Der Glanz wurde nach DIN 67 530 mit einem Dr. Lange Reflektometer UME 1 unter einem Einstrahlwinkel von 45° gemessen.

### Vergleichsversuch 1

22 Teile des SAN-gepfropften Polybutadienkautschuks, wie er für A-1 hergestellt worden war, werden mit 78 Teilen handelsüblichem SAN (35 % AN) auf einem Zweischneckenextruder bei 250°C gemischt. Das Produkt hat bei Raumtemperatur eine Kerbschlagzähigkeit von 11 kJ/m² und zeigt bei der Glanzmessung 68 % Reflektion.

### Vergleichsversuch 2

22 Teile des SAN-gepfropften Polybutadienkautschuks A-1 werden mit 73 Teilen SAN (35 % AN) und 5 Teilen Nitrilkautschuk B (Komponente B) auf einem Zweischneckenextruder bei 250°C gemischt. Das Produkt hat bei Raumtemperatur eine Kerbschlagzähigkeit von 13 kJ/m² und zeigt bei der Glanzmessung 43 % Reflektion.

### Vergleichsversuch 3

22 Teile des SAN-gepfropften Polybutadienkautschuks A-1 werden mit 73 Teilen SAN (35 % AN) und 5 Teilen des teilchenförmigen Copolymeren C auf einem Zweischneckenextruder bei 250°C gemischt. Das Produkt hat bei Raumtemperatur eine Kerbschlagzähigkeit von 10 kJ/m² und zeigt bei der Glanzmessung 33 % Reflektion.

### Erfindungsgemäßes Beispiel 1

22 Teile des SAN-gepfropften Polybutadienkautschuks A-1 werden mit 70 Teilen SAN (35 % AN), 5 Teilen Nitrilkautschuk und 3 Teilen feinteiligem Copolymeren C-1 auf einem Zweischneckenextruder bei 250°C gemischt. Das Produkt hat bei Raumtemperatur eine Kerbschlagzähigkeit von 12 kJ/m² und zeigt 17 % Reflektion.

### Erfindungsgemäßes Beispiel 2

29 Teile des SAN-gepfropften Polyacrylatkautschuks A-2 werden mit 70 Teilen SAN (35 % AN), 5 Teilen Nitrilkautschuk und 3 Teilen feinteiligem Copolymeren C-1 auf einem Zweischneckenextruder bei 250°C gemischt. Das Produkt hat bei Raumtemperatur eine Kerbschlagzähigkeit von 5 kJ/m² und zeigt 23 % Reflektion.

## Patentansprüche

1. Thermoplastische Formmasse, enthaltend, bezogen auf die Summe ihrer Bestandteile A, B und C,
A:70 bis 99 Gew.-% eines thermoplastischen Harzes A aus, bezogen auf A,
A1:50 bis 100 Gew.-% einer Hartmatrix A1 aus, bezogen auf A1,
A11:50 bis 95 Gew.-% Einheiten einer vinylaromatischen Verbindung oder Methylmethacrylat oder deren Mischungen (A11) und
A12:5 bis 50 Gew.-% Einheiten des Acrylnitrils A12;
A2:bis zu 50 Gew.-% eines kautschukelastischen teilchenförmigen Pfropfcopolymerisates A2 aus, bezogen auf A2,
A21:30 bis 80 Gew.-% mindestens einer elastomeren Pfropfgrundlage A21 mit einer mittleren Teilchengröße von 30 bis 1000 nm aus, bezogen auf A21,
A211:50 bis 100 Gew.-% Einheiten eines 1,3-Diens oder kautschukelastische Polymere bildenden C₄-C₈-Alkylacrylats (A211),
A212:bis zu 50 Gew.-% Einheiten mindestens eines Vinylmonomeren A212;
und
A22:15 bis 85 Gew.-% einer Pfropfhülle A22 aus, bezogen auf A22,
A221:50 bis 90 Gew.-% Einheiten eines vinylaromatischen Monomeren A221 und
A222:10 bis 50 Gew.-% Einheiten des Acrylnitrils A222;
B:0,5 bis 15 Gew.-% eines Nitrilkautschuks B aus, bezogen auf B,
B1:10 bis 40 Gew.-% Einheiten des Acrylnitrils und
B2:60 bis 90 Gew.-% Einheiten des Butadiens;
und
C:0,5 bis 15 Gew.-% eines in der Hartmatrix A verteilten teilchenförmigen Polymerisats C aus, bezogen auf C,
C1:80 bis 99 Gew.-% Einheiten des Methylmethacrylats
C2:0,5 bis 15 Gew.-% Einheiten eines Esters der Acrylsäure,
C3:0,5 bis 5 Gew.-% Einheiten eines mit C1 und C2 copolymerisierbaren vernetzenden Monomeren und
C4:bis zu 10 Gew.-% Einheiten eines polaren Monomeren ausgewählt aus (Meth)acrylsäure, Hydroxyethyl(meth)acrylat und Dimethylaminoethyl(meth)acrylat,
wobei die mittlere Teilchengröße von C 50 bis 50 000 nm beträgt.

## Claims

1. A thermoplastic molding compound comprising, based on the sum total of its ingredients A, B and C,
A: 70 to 99 % by weight of a thermoplastic resin A containing, based on A,
A1: 50 to 100 % by weight of a hard matrix A1 containing, based on A1,
A11: 50 to 95 % by weight of units of an aromatic vinyl compound or methyl methacrylate or mixtures thereof (A11) and
A12: 5 to 50 % by weight of units of acrylonitrile A12;
A2: up to 50 % by weight of a rubber-elastic particulate graft copolymer A2 containing, based on A2,
A21: 30 to 80 % by weight of at least one elastomeric grafting base A21 having an average particle size of 30 to 1000 nm and containing, based on A21,
A211: 50 to 100 % by weight of units of a 1,3-diene or of a C₄-C₈-alkyl acrylate that forms rubber-elastic polymers (A211),
A212: up to 50 % by weight of units of at least one vinyl monomer A212;
and
A22: 15 to 85 % by weight of a graft shell A22 containing, based on A22,
A221: 50 to 90 % by weight of units of an aromatic vinyl monomer A221 and
A222: 10 to 50 % by weight of units of acrylonitrile A222;
B: 0.5 to 15 % by weight of a nitrile rubber B containing, based on B,
B1: 10 to 40 % by weight of units of acrylonitrile and
B2: 60 to 90 % by weight of units of butadiene;
and
C: 0.5 to 15 % by weight of a particulate polymer C dispersed in the hard matrix A and containing, based on C,
C1: 80 to 99 % by weight of units of methyl methacrylate,
C2: 0.5 to 15 % by weight of units of an ester of acrylic acid,
C3: 0.5 to 5 % by weight of units of a crosslinking monomer copolymerizable with C1 and C2, and
C4: up to 10% by weight of units of a polar monomer selected from (meth) acrylic acid, hydroxyethyl (meth)acrylate and dimethylaminoethyl (meth)acrylate,
C having an average particle size of 50 to 50,000 nm.

## Revendications

1. Masse de moulage thermoplastique contenant, rapportés à la somme de ses constituants A, B et C,
A: de 70 à 99% en poids d'une résine thermoplastique A constituée par, rapportés à A,
A1: de 50 à 100% en poids d'une matrice dure A1 constituée par, rapportés à A1,
A11: de 50 à 95% en poids d'unités d'un composé vinylaromatique ou de méthacrylate de méthyle ou encore de leurs mélanges (A11) et
A12: de 5 à 50% en poids d'unités de l'acrylonitrile A12;
A2: à concurrence de 50% en poids d'un copolymère greffé A2 de forme particulaire présentant une élasticité analogue à celle du caoutchouc, constitué par, rapportés à A2,
A21: de 30 à 80% en poids d'au moins un substrat de greffage élastomère A21 possédant une granulométrie moyenne de 30 à 1000 nm, constitué, rapportés à A21,
A211: de 50 à 100% en poids d'un 1,3-diène ou d'acrylate d'alkyle en C₄-C₈ formant des polymères présentant une élasticité analogue à celle du caoutchouc (A211),
A212: à concurrence de 50% en poids d'unités d'au moins un monomère vinylique A212;
et
A22: de 15 à 85% en poids d'une enveloppe de greffage A22 constituée par, rapportés à A22,
A221: de 50 à 90% en poids d'unités d'un monomère vinylaromatique A221 et
A222: de 10 à 50% en poids d'unités de l'acrylonitrile A222;
B: de 0,5 à 15% en poids d'un caoutchouc nitrile B constitué par, rapportés à B,
B1 : de 10 à 40% en poids d'unités de l'acrylonitrile et
B2: de 60 à 90% en poids d'unités du butadiène;
et
C: de 0,5 à 15% en poids d'un polymère particulaire C réparti dans la matrice dure A, constitué par, rapportés à C,
C1: de 80 à 99% en poids d'unités du méthacrylate de méthyle,
C2: de 0,5 à 15% en poids d'unités d'un ester de l'acide acrylique,
C3: de 0,5 à 5% en poids d'unités d'un monomère de réticulation copolymérisable avec C1 et C2, et
C4: à concurrence de 10% en poids d'un monomère polaire choisi parmi le groupe comprenant l'acide (méth)acrylique, le (méth)acrylate d'hydroxyéthyle et le (méth)acrylate de diméthylaminoéthyle,
la granulométrie moyenne de C s'élevant de 50 à 50 000 nm.
